# EUROPÄISCHE PATENTANMELDUNG

(11) **EP 3 112 996 A1**
(43) Veröffentlichungstag der Anmeldung: **04.01.2017**
(21) Anmeldenummer: 15174438.0
(22) Anmeldetag: 30.06.2015
(51) Int. Cl.: G06F 3/041, G06F 3/0488, G06F 3/038, G06F 3/0362

(54) **BEDIENELEMENT UND BEDIEN- UND BEOBACHTUNGSSYSTEM**

(71) Anmelder: Siemens Aktiengesellschaft, 80333 München (DE)
(72) Erfinder: Glaser, Maximilian, 91365 Weilersbach (DE); Kersten, Thomas, 91096 Möhrendorf (DE); Singer, Marc, 91301 Forchheim (DE)

(57) **Zusammenfassung**

Die Erfindung betrifft ein Bedienelement (1) ausgestaltet mit einer Fußfläche (2) zum Anbringen auf eine Bedienoberfläche (3) eines berührungsempfindlichen Displays (4) umfassend,
- ein Betätigungsteil (5), welches zur haptischen Wahrnehmung eines Bedieners (45) ausgestaltet ist und weiter ausgestaltet ist eine Betätigung durch den Bediener (45) in ein elektrisches Bedien-Signal (6) zu wandeln,
- eine Kontrolleinheit (7) ausgestaltet das Bedien-Signal (6) als einen Bedienbefehl für einen Datentransfer aufzubereiten,
- eine Übertragungseinheit (8) ausgestaltet den Bedienbefehl (60) von der Kontrolleinheit (7) entgegenzunehmen, wobei die Übertragungseinheit (8) derart in der Fußfläche (2) angeordnet ist, dass der Bedienbefehl (60) drahtlos durch die Bedienoberfläche (3) übertragbar ist.

## Beschreibung

Die Erfindung betrifft ein Bedienelement ausgestaltet mit einer Fußfläche zum Anbringen auf eine Bedienoberfläche eines berührungsempfindlichen Displays. Auch betrifft die Erfindung ein Bedien- und Beobachtungssystem mit einen berührungsempfindlichen Display, wobei ein Bedienelement darauf angebracht ist.

Im industriellen Umfeld setzt sich der Trend der neuen Bedienphilosophie mit Touch Screen immer weiter durch. In einer Vielzahl von Bereichen, z.B. in der Automatisierungstechnik, der Werkzeugmaschinensteuerung und der Prozesssteuerung, werden zunehmend Multitouch-Bediengeräte verwendet, um den Anforderungen der neuen Bediengeneration gerecht zu werden. So ist es derzeit bereits möglich, Tasteingaben bzw. Gesten (Zoomen, Rotieren) auszuführen. Für bestimmte Anwendungsbereiche wie z.B. eine Kransteuerung oder eine Robotersteuerung oder ein Einrichtbetrieb einer Maschine, ist die Befehlseingabe über einen Touch Screen nicht intuitiv zu bedienen, so dass auf herkömmliche Bediengeräte in Maschinensteuertafeln mit Joy Sticks und Drehgebern zurückgegriffen werden muss. Von Nachteil ist dabei, dass zwei separate Eingabesysteme zum einen ein HMI-Panel als Touch Screen und zum anderen eine Maschinensteuerstafel mit mechanischen intuitiv bedienbaren Eingabeelementen benötigt wird, um insbesondere Eingabebefehle für Kransteuerungen, Roboterbedienungen, Achsenverfahrbewegungen intuitiv und sicher durchführen zu können.

Der Erfindung liegt die Aufgabe zugrunde auf zwei separate Eingabesysteme zu verzichten, aber dennoch einem Bediener eine intuitive und sichere Eingabemöglichkeit zu bieten.

Gelöst wird die Aufgabe durch ein Bedienelement ausgestaltet mit einer Fußfläche zum Anbringen auf einer Bedienoberfläche eines berührungsempfindlichen Displays umfassend, ein Betätigungsteil, welches zur haptischen Wahrnehmung eines Bedieners ausgestaltet ist und weiter ausgestaltet ist eine Betätigung durch einen Bediener in ein elektrisches Bedien-Signal zu wandeln, eine Kontrolleinheit ausgestaltet das Bedien-Signal als einen Bedienbefehl für einen Datentransfer aufzubereiten, eine Übertragungseinheit ausgestaltet den Bedienbefehl von der Kontrolleinheit entgegenzunehmen, wobei die Übertragungseinheit derart in der Fußfläche angeordnet ist, dass der Bedienbefehl drahtlos durch die Bedienoberfläche übertragbar ist. Mit der Erfindung wird eine intuitive Bedienbarkeit insbesondere von projiziert kapazitiven Multitouch-Panels für den industriellen Einsatzbereich für bestimmte kritische Bedienhandlungen erweitert. Aufgrund einer beispielsweise durchgehenden Glasscheibe mit dahinterliegendem Display bei einem Bedien- und Beobachtungssystem ist eine klassische Kommunikation eines aufgesetzten Bedienelementes zwischen einer Steuerung und dem Bedienelement über herkömmliche Signalleitungen nicht möglich.

Bevorzugt weist die Übertragungseinheit ein erstes Kopplungsmittel, welches nach dem Prinzip der kapazitiven Kopplung arbeitet und/oder ein zweites Kopplungsmittel, welches nach dem Prinzip der optischen Kopplung arbeitet, auf. Vorzugsweise können für die Kommunikation des aufgesetzten Bedienelementes mit einer Steuerung zum einen der Touch-Sensor des berührungsempfindlichen Displays für eine kapazitive Kopplung und zum anderen des Displays für eine optische Kopplung verwendet werden.

Insbesondere im Hinblick auf eine sichere Maschinenbedienung weist das Bedienelement ein Sicherungsmittel auf, welches ausgestaltet ist, den Bedienbefehl mittels Sicherungsmechanismen in ein Sicherheitstelegramm einzubetten und zur sicheren Übertragung an die an sich unsichere Übertragungseinheit weiterzugeben. Hiermit ist es dann möglich, eine sichere Kommunikation (Grauer Kanal) über die oder das Kopplungsmittel aufzubauen. Sicherheitskomponenten nach dem Grauer-Kanal-Prinzip setzen auf einen vorhandenen Übertragungskanal auf, wobei dieser Übertragungskanal unverändert genutzt wird. Da in der Regel dieser Übertragungskanal als unsicher betrachtet wird, dient ein Nutzdatenanteil für den vorhandenen Übertragungskanal lediglich als Transportmedium für ein eingebettetes sicherheitsgerichtetes Telegramm, welches zusätzliche, eigenständige Sicherheitsmechanismen aufweist, welche durch die Sicherungsmittel generiert werden. Die Sicherheitstelegramme werden damit durch den unsicheren Übertragungskanal getunnelt. Ein Empfänger überprüft anhand von mitgelieferten Sicherungsinformationen, ob die Übertragung korrekt war und veranlasst in einem Fehlerfall gegebenenfalls einen Übergang in einen sicheren Zustand. Für den Fall einer zweikanaligen Auswertung des Bediensignals des Betätigungsteils, wobei das erste Kopplungsmittel und das zweite Kopplungsmittel gemeinsam genutzt werden, werden die kapazitive Kopplung und die optische Kopplung gleichzeitig genutzt.

Dazu ist es von Vorteil, wenn das Bedienelement ein erstes Sicherungsmittel aufweist, welches ausgestaltet ist den Bedienbefehl mittels Sicherungsmechanismen in ein erstes Sicherheitstelegramm einzubetten und zur sicheren Übertragung an das an sich unsichere erste Kopplungsmittel weiterzugeben und wenn das Bedienelement weiterhin ein zweites Sicherungsmittel auf, welches ausgestaltet ist den Bedienbefehl mittels Sicherungsmechanismen in ein zweites Sicherheitstelegramm einzubetten und zur sicheren Übertragung an das an sich unsichere zweite Kopplungsmittel weiterzugeben.

Um eine sichere Maschinenbedienung, insbesondere ein fehlersicheres Maschinenbediensystem, weiter zu verbessern, ist bei dem Bedienelement das zweite Kopplungsmittel ausgestaltet, das zweite Sicherheitstelegramm vom Bedienelement zum berührungsempfindlichen Display zu übertragen und ein drittes Sicherheitstelegramm vom berührungsempfindlichen Display zum Bedienelement zu übertragen, wobei das Sicherungsmittel ein Überwachungsmittel aufweist, welches ausgestaltet ist, eine fehlerfreie Funktionalität des Bedienelementes zu überwachen und im Fehlerfall auf eine mittels des dritten Sicherheitstelegrammes gesendete Funktionsanfrage eine Fehlerrückmeldung erzeugt. Ist an dem Bedien- und Beobachtungssystem eine fehlersichere Automatisierungssteuerung angeschlossen, so wird die fehlersichere Automatisierungssteuerung in ihrem Programmcode derart implementiert sein, dass sie zyklisch eine Sicherheitsfunktionsanfrage über das Bedien- und Beobachtungsgerät an das Bedienelement sendet. Die Sicherheitsfunktionsanfrage kann in Form eines dritten Sicherheitstelegrammes optisch durch das Bedien- und Beobachtungssystem an das Bedienelement übertragen werden.

Im Hinblick auf eine autarke Energieversorgung des Bedienelementes ist es von besonderem Vorteil wenn zusätzlich in der Fußfläche ein Energiegewinnungsmittel angeordnet ist, welches ausgestaltet ist nach dem Photoeffekt einen elektrischen Strom zu erzeugen und eine Versorgungsspannung für das Bedienelement bereitzustellen. Eine Versorgung der Elektronik im Bedienelement könnte somit insbesondere über Solarzellen oder Photodioden, welche durch das Licht des Displays, insbesondere deren Hintergrundbeleuchtung, gespeist werden, bereitgestellt werden.

Eine weiterführende Ausgestaltung des Bedienelementes sieht vor, dass in der Fußfläche eine Erkennungsmarke angeordnet ist. Mit einer Erkennungsmarke ist es möglich, eine Funktion des Bedienelementes über die vorhandene Erkennungsmarke zu identifizieren. Die Identifikation der Erkennungsmarke kann beispielsweise optisch oder kapazitiv erfolgen. Eine Software des verwendeten Bedien- und Beobachtungssystems kann somit automatisiert erkennen, welches Bedienelement gerade verwendet wird und aktiviert dementsprechend bedienelementspezifische Features.

Die eingangs genannte Aufgabe wird ebenfalls durch ein Bedien- und Beobachtungssystem mit einem berührungsempfindlichen Display gelöst. Das Bedien- und Beobachtungssystem ist ausgestaltet, eine Bedienhandlung eines Bedieners auf einer Bedienoberfläche auszuwerten, wobei für eine weitere Bedienhandlung ein Bedienelement mit einer Fußfläche auf der Bedienoberfläche angeordnet ist. Für die weitere Bedienhandlung ist das Bedienelement mit einem Betätigungsteil versehen, welches zur haptischen Wahrnehmung eines Bedieners ausgestaltet ist, wobei das Betätigungsteil weiterhin ausgestaltet ist, die weitere Betätigung durch den Bediener in ein elektrisches Bedien-Signal zu wandeln, dabei weist das Bedienelement eine Kontrolleinheit auf, welches ausgestaltet ist das Bedien-Signal als einen Bedienbefehl für einen Datentransfer aufzubereiten, weiterhin aufweisend eine Übertragungseinheit, welche ausgestaltet ist, den Bedienbefehl von der Kontrolleinheit entgegenzunehmen, wobei die Übertragungseinheit derart in der Fußfläche angeordnet ist, dass der Bedienbefehl drahtlos durch die Bedienoberfläche übertragbar ist, wobei das berührungsempfindliche Display ein Empfangsmittel zur Entgegennahme des Bedienbefehls aufweist. Es ist von Vorteil bei diesem Bedien- und Beobachtungssystem das ein Bediener durch das Bedienelement ein haptisches Feedback zur intuitiven Bedienung von schwierigen, insbesondere sicherheitskritischen industriellen Prozessen erhält und somit kann auf eine klassische zusätzliche Maschinensteuertafel verzichtet werden.

Weiterhin ist es vorteilhaft, wenn die Übertragungseinheit ein erstes Kopplungsmittel, welches nach dem Prinzip der kapazitiven Kopplung arbeitet und/oder ein zweites Kopplungsmittel, welches nach dem Prinzip der optischen Kopplung arbeitet, aufweist, wobei entsprechend dass Empfangsmittel ein erstes Empfangsmittel für die kapazitive Kopplung und ein zweites Empfangsmittel für die optische Kopplung aufweist.

Mit dem ersten und zweiten Kopplungsmittel und mit dem ersten und zweiten Empfangsmittel kann ein bidirektionaler Kanal zwischen einer Steuerung und dem Bedienelement aufgebaut werden. Beispielsweise könnte die kapazitive Kopplung für die Kommunikation von dem Bedienelement zu einer an das Bedien- und Beobachtungssystem angeschlossenen Steuerung zu dem Bedienelement dienen.

Das berührungsempfindliche Display weist dabei ein Display und einen projiziert-kapazitiven Berührsensor auf, wobei zumindest Teilbereiche des Berührsensors für die kapazitive Kopplung genutzt werden, weiterhin ist das Display mit neben einer Matrix an Segmenten zur Informationsdarstellung mit einer Matrix von Photosensoren ausgestaltet, wobei die Photosensoren zusätzlich für eine bidirektionale optische Kopplung genutzt werden.

Bei den Photosensoren im Display handelt es sich um beispielsweise zusätzlich in ein TFT-Display eingebrachte Photosensoren, es wird dann von einem In-Cell-Display gesprochen. Für eine bidirektionale Kommunikation nur in dem "optischen Kanal" kann dann zum einen die Strecke Display (Licht über die Pixel) zum zweiten Kopplungsmittel und zum anderen die Strecke über einen zusätzlichen Lichtsender im Bedienelement zu den Photosensoren im Display genutzt werden.

Insbesondere für eine sicherheitsgerichtete Bedienung oder Maschinensteuerung ist in dem Bedienelement ein Sicherungsmittel angeordnet, welches ausgestaltet ist, den Bedienbefehl mittels Sicherungsmechanismen in ein Sicherheitstelegramm einzubetten und zur sicheren Übertragung an die an sich unsichere Übertragungseinheit weiterzugeben.

Dabei ist es vorteilhaft, wenn das Bedienelement ein erstes Sicherungsmittel aufweist, welches ausgestaltet ist den Bedienbefehl mittels Sicherungsmechanismen in ein erstes Sicherheitstelegramm einzubetten und zur sicheren Übertragung an das an sich unsichere erste Kopplungsmittel weiterzugeben und weiterhin weist das Bedienelement ein zweites Sicherungsmittel auf, welches ausgestaltet ist den Bedienbefehl mittels Sicherungsmechanismen in ein zweites Sicherheitstelegramm einzubetten und zur sicheren Übertragung an das an sich unsichere zweites Kopplungsmittel weiterzugeben, wobei das erste Empfangsmittel und das zweite Empfangsmittel entsprechende Auswertemittel zur Prüfung einer fehlerfreien Datenübertragung des Bedienbefehls aufweisen.

Wird das Bedien- und Beobachtungssystem in einer fehlersicheren Automatisierungsumgebung eingesetzt, so kann die Fehlersicherheit weiterhin dadurch erhöht werden, dass das zweite Kopplungsmittel ausgestaltet ist, das zweite Sicherheitstelegramm vom Bedienelement zum berührungsempfindlichen Display zu übertragen und ein drittes Sicherheitstelegramm vom berührungsempfindlichen Display zum Bedienelement zu übertragen, wobei das Sicherungsmittel ein Überwachungsmittel aufweist, welches ausgestaltet ist, eine fehlerfreie Funktionalität des Bedienelementes zu überwachen und im Fehlerfalle auf eine mittels des dritten Sicherheitstelegramms gesendete Funktionsanfrage eine Fehlerrückmeldung erzeugt. Sollte das Bedienelement eine Fehlerrückmeldung erzeugen, welche anzeigt, dass in dem Bedienelement ein Fehler vorherrscht, so wird diese Fehlerrückmeldung, beispielsweise über das zweite Sicherheitstelegramm an das Bedien- und Beobachtungssystem gesendet und an eine an das Bedien- und Beobachtungssystem angeschlossene fehlersichere Automatisierungssteuerung übertragen. Mit Empfang der Fehlerrückmeldung geht die fehlersichere Automatisierungssteuerung in einen sicheren Zustand, d.h. die Ausgänge werden auf sichere Werte oder auf Null zurückgesetzt.

Im Hinblick auf eine autarke Energieversorgung des Bedienelementes für das Bedien- und Beobachtungssystem ist es von Vorteil, wenn zusätzlich in der Fußfläche ein Energiegewinnungsmittel angeordnet ist, welches ausgestaltet ist nach dem Photoeffekt einen elektrischen Strom zu erzeugen und eine Versorgungsspannung für das Bedienelement bereitzustellen.

Auf das Bedien- und Beobachtungssystem aufgebrachte Bedienelemente können dadurch automatisiert erkannt werden, dass in der Fußfläche eine Erkennungsmarke angeordnet ist und ein Markenerkennungsmittel dazu ausgestaltet ist zu erkennen, welche Art von Bedienelement auf der Bedienoberfläche angeordnet ist und weiterhin ausgestaltet ist einer Visualisierungssoftware eine Information über die Eigenschaften des jeweils angebrachten Bedienelementes übermittelt. Eine Funktion eines angebrachten Bedienelementes kann über die vorhandenen Erkennungsmarken identifiziert werden und dies kann dazu genutzt werden, den Bedien- und Beobachtungssystem automatisiert mitzuteilen, welches Bedienelement gerade verwendet wird und dementsprechend über die Visualisierungssoftware bedienspezifische Anzeigemittel bereitzustellen.

Als weitere Vorteile werden angesehen: Eine flexible Positionierung eines Bedienelementes auf dem Touchscreen. Das Bedienelement kann an beliebigen Stellen auf einer Frontscheibe eines Touch-Eingabesystems angebracht werden. Ein derart erweitertes Bedien- und Beobachtungssystem muss nicht mit seiner Bedienoberfläche hardwaremäßig auf die Benutzung eines solchen Bedienelementes ausgelegt sein, es wird nunmehr lediglich eine softwaremäßige Konfiguration des Bedien- und Beobachtungssystems genutzt.

Intuitive Bedienung. Ein Bediener erhält durch das Bedienelement ein haptisches Feedback und kann daher seine Maschine sicher und besser bedienen und somit kann auf eine klassische Maschinensteuertafel verzichtet werden.

Erweiterung des Funktionsumfanges. Die Einsetzbarkeit eines Bedien- und Beobachtungssystems kann durch eine solche Kombination von Bedienelement und berührungsempfindlichen Display enorm gesteigert werden. Für den Einsatz im industriellen Umfeld wird beispielsweise durch eine weitere konstruktive Abwandlung eines Joy Sticks ein 3D-Achsencontroller denkbar und realisierbar.

Eingabesichere Bedienhandlungen. Durch die bidirektionale Kommunikation zwischen den Bedienelement und den Bedien- und Beobachtungssystem ist es möglich, einen "Grauen Kanal" aufzubauen, der über ein Sicherheitsprotokoll abgesichert ist.

Die Kombination zwischen Bedienelement und Bedien- und Beobachtungssystem, insbesondere mit einen Touch Screen, bietet nun weitere neue Möglichkeiten ein Touch-System zu verwenden, ohne auf ein gefordertes notwendiges haptisches Feedback inklusive der sicheren Eingabe zu verzichten.

Ein Ausführungsbeispiel der Erfindung ist in der Zeichnung schematisch dargestellt und wird im Folgenden näher erläutert. In der Zeichnung zeigt die
- FIG 1: ein Bedien- und Beobachtungssystem für eine Eingabe durch einen Bediener,
- FIG 2: ein an einer Bedienoberfläche angebrachtes Bedienelement,
- FIG 3: ein schematisch dargestelltes Funktionsprinzip des Bedienelementes und
- FIG 4: ein Bedienelement an einem Bedien- und Beobachtungssystem mit einer fehlersicheren Automatisierungssteuerung.

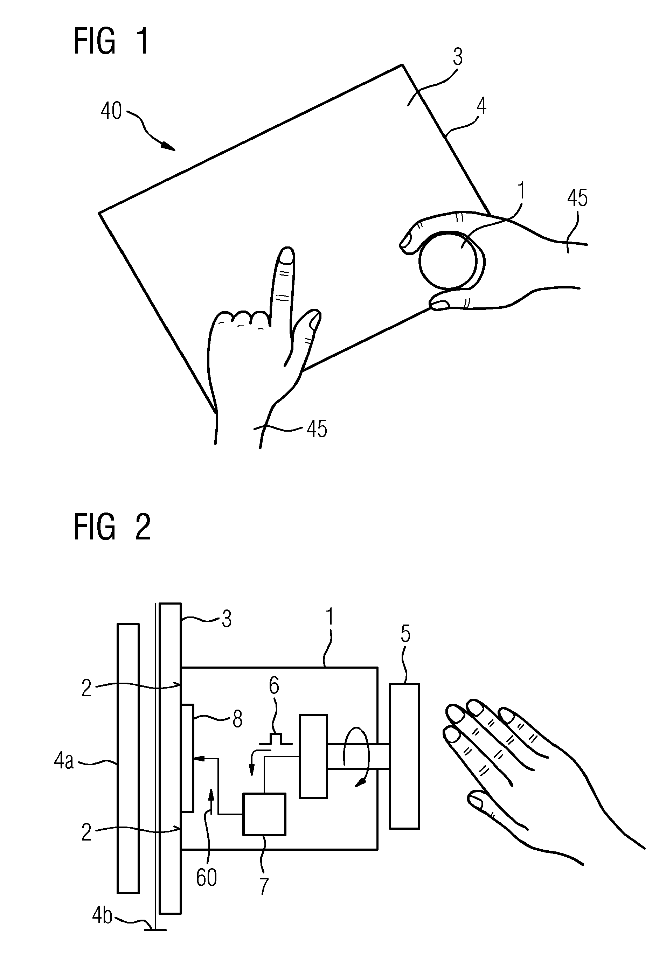

Gemäß der FIG 1 ist ein Bedien- und Beobachtungssystem 40 mit einem berührungsempfindlichen Display 4 dargestellt. Das Bedien- und Beobachtungssystem 40 ist ausgestaltet eine Bedienhandlung eines Bedieners auf einer Bedienoberfläche 3 auszuwerten. Für eine weitere Bedienhandlung, insbesondere für eine Bedienhandlung mit einer haptischen Rückmeldung, ist ein Bedienelement 1 auf der Bedienoberfläche 3 angeordnet.

Mit der FIG 2 wird das Funktionsprinzip des Bedienelementes 1 näher beschrieben. Das Bedienelement 1 ist mit einer Fußfläche 2 ausgestaltet, wobei die Fußfläche 2 zusätzlich zum Anbringen auf der Bedienoberfläche 3 des berührungsempfindlichen Displays 4 ausgestaltet ist. Das Bedienelement 1 weist ein Betätigungsteil 5 auf, welches zur haptischen Wahrnehmung eines Bedieners 45 ausgestaltet ist und weiter ausgestaltet ist eine Betätigung durch den Bediener in ein elektrisches Bedien-Signal 6 zu wandeln. Eine Kontrolleinheit 7 ist mit dem Betätigungsteil 5 verbunden und ausgestaltet das Bedien-Signal 6 als einen Bedienbefehl 60 für einen Datentransfer aufzubereiten. Eine Übertragungseinheit 8 ist wiederum mit der Kontrolleinheit 7 verbunden und ausgestaltet den Bedienbefehl 60 von der Kontrolleinheit 7 entgegenzunehmen, wobei die Übertragungseinheit 8 derart in der Fußfläche 2 angeordnet ist, dass der Bedienbefehl 60 drahtlos durch die Bedienoberfläche 3 übertragbar ist. Ausgehend von der Fußfläche 2 durchdringt der Bedienbefehl 60 somit die Bedienoberfläche 3 und trifft auf einen Berührsensor 4b, in welchem beispielsweise der Bedienbefehl 60 kapazitiv ausgewertet werden kann und anschließend trifft der Bedienbefehl 60 auf ein Display 4a in welchen der Bedienbefehl 60 im Falle eines In-Cell-Displays zusätzlich optisch ausgewertet werden kann.

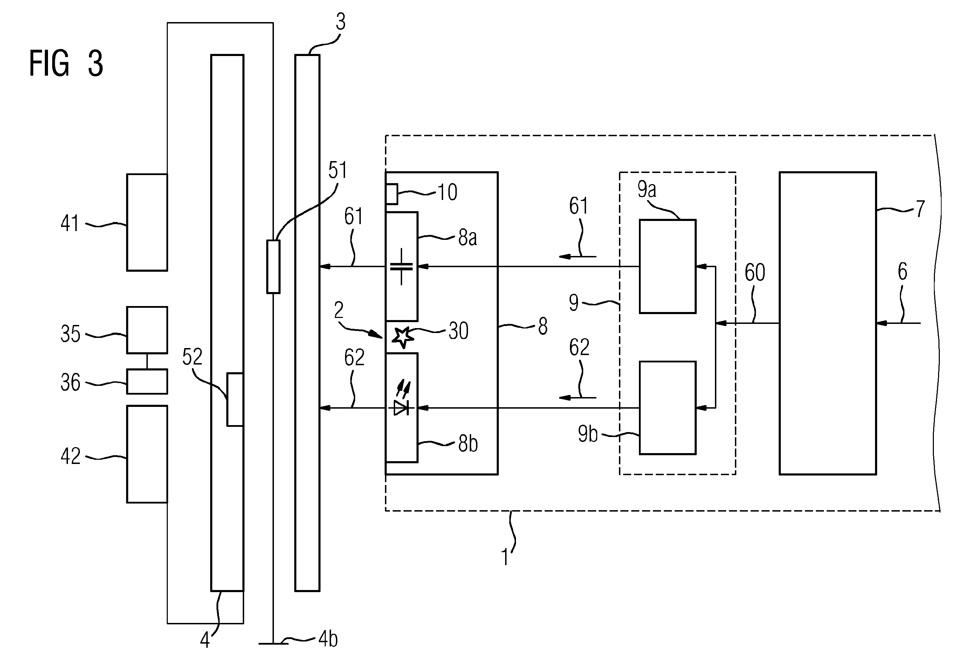

Die FIG 3 zeigt das aus der FIG 1 bekannte Bedien- und Beobachtungssystem 40 und das aus der FIG 2 bekannte Bedienelement 1 in einer weiteren detaillierten Darstellung. Das Bedienelement 1 weist nun eine Übertragungseinheit 8 auf, welche ein erstes Kopplungsmittel 8a, welches ausgestaltet ist nach dem Prinzip einer kapazitiven Kopplung zu arbeiten und ein zweites Kopplungsmittel 8b aufweist, welches ausgestaltet ist nach dem Prinzip der optischen Kopplung zu arbeiten.

Das erste Kopplungsmittel 8a ausgestaltet als ein kapazitives Kopplungsmittel arbeitet mit einem ersten Koppelbereich 51 zusammen. Der erste Koppelbereich 51 ist als ein kapazitiver Koppelbereich in dem Berührsensor 4b angeordnet. Das zweite Kopplungsmittel 8b ist als ein optisches Kopplungsmittel ausgestaltet und arbeitet mit einem zweiten Koppelbereich 52 zusammen, welcher im Display 4 angeordnet ist.

Für eine autarke Energieversorgung des Bedienelementes 1 ist in der Fußfläche 2 ein Energiegewinnungsmittel 10 angeordnet. Für ein automatisiert ablaufendes Erkennen eines auf die Bedienoberfläche aufgebrachten Bedienelementes 1 weist das Bedienelement 1 in der Fußfläche 2 eine Erkennungsmarke 30 auf. Ein über das Betätigungsteil 5 generiertes Bedien-Signal 6 wird über die Kontrolleinheit 7 ausgewertet und für einen zukünftigen Datentransfer wird der Bedienbefehl 60 bereitgestellt. Der Bedienbefehl 60 gelangt in ein erstes Sicherungsmittel 9a und in ein zweites Sicherungsmittel 9b, wo er mittels Sicherungsmechanismen in ein erstes Sicherheitstelegramm 61 und in ein zweites Sicherheitstelegramm 62 zur sicheren Übertragung an die an sich unsicheren Kopplungsmittel 8a,8b eingebettet wird. Der derart getunnelte Bedienbefehl 60 wird nun mittels des ersten Kopplungsmittel 8a kapazitiv durch die Bedienoberfläche 3 in den ersten Koppelbereich 51 des Berührsensors 4b übertragen und über ein erstes Empfangsmittel 41 ausgewertet. Der mit den zweiten Sicherungsmittel 9b getunnelte Bedienbefehl 60 wird mit dem zweiten Kopplungsmittel 8b optisch durch die Bedienoberfläche 3 zu dem zweiten Koppelbereich 52 optisch übertragen. Ein zweites Empfangsmittel 42 nimmt das derart optisch übertragene zweite Sicherheitstelegramm 62 entgegen und wertet dieses aus. Neben den zusätzlichen ersten Empfangsmittel 41 und zweiten Empfangsmittel 42 weist das Bedien- und Beobachtungssystem 40 noch zusätzlich ein Markenerkennungsmittel 35 auf, welches ausgestaltet ist eine Erkennungsmarke 30 in der Fußfläche 2 des Bedienelementes 1 zu erkennen, wobei die Art des Bedienelementes 1 erkannt wird und einer Visualisierungssoftware 36 eine Information über die Eigenschaften des jeweils angebrachten Bedienelementes 1 übermittelt wird.

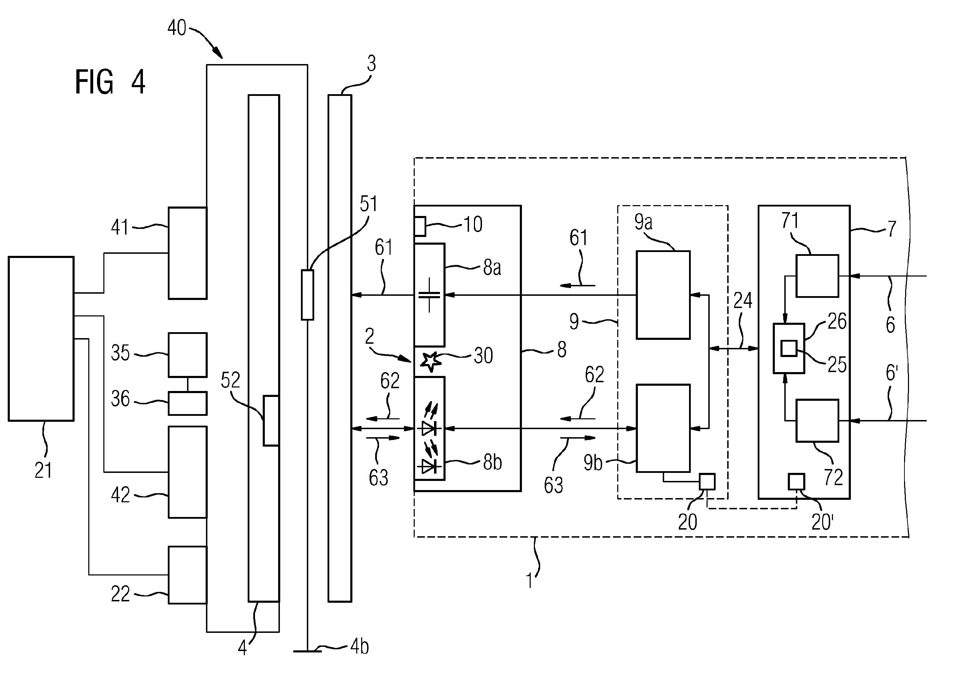

Gemäß der FIG 4 ist eine alternative Ausführung zu dem Bedien- und Beobachtungssystem 40 mit dem Bedienelement 1 aus FIG 3 dargestellt. An das Bedien- und Beobachtungssystem 40 ist eine fehlersichere Automatisierungssteuerung 21 angeschlossen. Die fehlersichere Automatisierungssteuerung 21 kann über eine Datenverbindung mit dem ersten Empfangsmittel 41 das erste Sicherheitstelegramm 61 auslesen und mit einer Datenverbindung zu dem zweiten Empfangsmittel 42 kann die fehlersichere Automatisierungssteuerung das zweite Sicherheitstelegramm 62 auslesen. Damit die fehlersichere Automatisierungssteuerung auch ein Telegramm zu dem Bedienelement 1 absetzen kann, ist die fehlersichere Automatisierungssteuerung 21 mit einem Sendemittel 22 verbunden. Das Sendemittel 22 ist am Bedien- und Beobachtungssystem 40 angeordnet und steht in Verbindung mit dem zweiten Koppelbereich 52, welcher als ein optischer Koppelbereich im Display 4 ausgestaltet ist. Über diese Sendeverbindung kann von der fehlersicheren Automatisierungssteuerung 21 eine Funktionsanfrage an das Bedienelement gesendet werden. Diese Funktionsanfrage dient als eine Art Überwachung, ob sich eventuell in den Bedienelement 1 ein Fehler eingeschlichen hat.

Bei dieser Ausgestaltungsvariante weist das zweite Kopplungsmittel 8b nun zusätzlich zu einer Sende LED eine Fotodiode zum Empfang von Signalen auf. Auch wäre es denkbar, dass in dem zweiten Kopplungsmittel 8b nur eine Fotodiode zum Empfang von Signalen eingebaut ist. Da nun das zweite Kopplungsmittel 8b für einen Empfang von Sicherheitstelegrammen und für ein Senden von Sicherheitstelegrammen ausgestaltet ist, ist es möglich, dass das zweite Sicherheitstelegramm 62 vom Bedienelement 1 zum berührungsempfindlichen Display 4 übertragen wird und ein drittes Sicherheitstelegramm 63 vom berührungsempfindlichen Display 4 zum Bedienlement 1 übertragen werden kann. In dem dritten Sicherheitstelegramm 63 verbirgt sich nun die Funktionsanfrage der an das Bedien- und Beobachtungssystem 40 angeschlossenen fehlersicheren Automatisierungssteuerung 21. Eine Verbindung zwischen dem zweiten Kopplungsmittel 8b und den zweiten Sicherungsmittel 9b ist nun als eine bidirektionale Verbindung ausgestaltet.

Um das Bedienelement 1 auf Funktionssicherheit zu überwachen, ist in dem Sicherungsmittel 9 ein Überwachungsmittel 20 angeordnet. Das Überwachungsmittel 20 steht mit dem zweiten Sicherungsmittel 9b in datentechnischer Verbindung. Auch ist ein weiteres Überwachungsmittel 20' in der Kontrolleinheit 7 angeordnet. Das Überwachungsmittel 20 und das weitere Überwachungsmittel 20' stehen ebenfalls miteinander in Verbindung. Um eine Eingabesicherheit weiter zu erhöhen, wird nach der mechanischen Eingabe, beispielsweise Drehen oder Drücken, eine redundante Auswertung der mechanischen Eingabe erfolgen. Es wird somit ein Bediensignal 6 und ein weiteres Bediensignal 6' erzeugt und abgegriffen. Die Bediensignale 6,6' werden der Kontrolleinheit 7 zugeführt. In dieser Ausgestaltungsvariante ist die Kontrolleinheit 7 mit einem ersten Auswertemittel 71 und einen zweiten Auswertemittel 72 versehen, wobei das Bediensignal 6 auf das erste Auswertemittel 71 geführt wird und das weitere Bediensignal 6' auf das zweite Auswertemittel 72 geführt wird. Die beiden ausgewerteten Bediensignale 6,6' werden einem Sicherheitscontroller 26 zugeführt. In dem Sicherheitscontroller 26 ist ein Sicherheitsprotokoll 25 implementiert. Als Besonderheit bei dieser Ausgestaltungsvariante ist nun zu beachten, dass zwischen dem Sicherungsmittel 9 und der Kontrolleinheit 7, ein bidirektionaler Übertragungskanal 24 entstanden ist. Die Funktionsanfrage der fehlersicheren Automatisierungssteuerung 21 kann nun bis in die Kontrolleinheit 7 gelangen und das weitere Überwachungsmittel 20' auf eine einwandfreie Funktion abfragen. Sollte eine einwandfreie Funktion des Bedienelementes 1 nicht von diesem quittiert werden, so geht die fehlersichere Automatisierungssteuerung 21 in einen sicheren Zustand, welches bedeutet die Ausgänge werden entweder zu Null zurückgeschaltet oder auf Werte gesetzt, welche in dem Prozess als sicher gelten.

## Patentansprüche

1. Bedienelement (1) ausgestaltet mit einer Fußfläche (2) zum Anbringen auf eine Bedienoberfläche (3) eines berührungsempfindlichen Displays (4) umfassend,
- ein Betätigungsteil (5), welches zur haptischen Wahrnehmung eines Bedieners (45) ausgestaltet ist und weiter ausgestaltet ist eine Betätigung durch den Bediener (45) in ein elektrisches Bedien-Signal (6) zu wandeln,
- eine Kontrolleinheit (7) ausgestaltet das Bedien-Signal (6) als einen Bedienbefehl (60) für einen Datentransfer aufzubereiten,
- eine Übertragungseinheit (8) ausgestaltet den Bedienbefehl (60) von der Kontrolleinheit (7) entgegenzunehmen, wobei die Übertragungseinheit (8) derart in der Fußfläche (2) angeordnet ist, dass der Bedienbefehl (60) drahtlos durch die Bedienoberfläche (3) übertragbar ist.

2. Bedienelement (1) nach Anspruch 1, wobei die Übertragungseinheit (8) ein erstes Kopplungsmittel (8a), welches nach dem Prinzip der kapazitiven Kopplung arbeitet und/oder ein zweites Kopplungsmittel (8b), welches nach dem Prinzip der optischen Kopplung arbeitet, aufweist.

3. Bedienelement (1) nach Anspruch 1 oder 2, aufweisend ein Sicherungsmittel (9), welches ausgestaltet ist, den Bedienbefehl (60) mittels Sicherungsmechanismen in ein Sicherheitstelegramm (61) einzubetten und zur sicheren Übertragung an die an sich unsichere Übertragungseinheit (8) weiterzugeben.

4. Bedienelement (1) nach Anspruch 2, aufweisend ein erstes Sicherungsmittel (9a), welches ausgestaltet ist den Bedienbefehl (60) mittels Sicherungsmechanismen in ein erstes Sicherheitstelegramm (61) einzubetten und zur sicheren Übertragung an das an sich unsichere erste Kopplungsmittel (8a) weiterzugeben und weiterhin aufweisend ein zweites Sicherungsmittel (9b), welches ausgestaltet ist, den Bedienbefehl (60) mittels Sicherungsmechanismen in ein zweites Sicherheitstelegramm (62) einzubetten und zur sicheren Übertragung an das an sich unsichere zweite Kopplungsmittel (9b) weiterzugeben.

5. Bedienelement (1) nach Anspruch 4, wobei weiterhin das zweite Kopplungsmittel (8b) ausgestaltet ist das zweite Sicherheitstelegramm (62) vom Bedienelement (1) zum berührungsempfindlichen Display (4) und ein drittes Sicherheitstelegramm (63) vom berührungsempfindlichen Display (4) zum Bedienelement (1) zu übertragen, wobei das Sicherungsmittel (9) ein Überwachungsmittel (20) aufweist, welches ausgestaltet ist eine fehlerfreie Funktionalität des Bedienelementes (1) zu überwachen und im Fehlerfall auf eine mittels des dritten Sicherheitstelegrammes (63) gesendete Funktionsanfrage eine Fehlerrückmeldung erzeugt.

6. Bedienelement (1) nach einem der Ansprüche 1 bis 5, wobei zusätzlich in der Fußfläche (2) ein Energiegewinnungsmittel (10) angeordnet ist, welches ausgestaltet ist, nach dem Photoeffekt einen elektrischen Strom zu erzeugen und eine Versorgungsspannung bereitzustellen.

7. Bedienelement (1) nach einem der Ansprüche 1 bis 6, wobei in der Fußfläche (2) eine Erkennungsmarke (30) angeordnet ist.

8. Bedien- und Beobachtungssystem (40) mit einem berührungsempfindlichen Displays (4), ausgestaltet eine Bedienhandlung eines Bedieners (45) auf einer Bedienoberfläche (3) auszuwerten, wobei für eine weitere Bedienhandlung ein Bedienelement (1) mit einer Fußfläche (2) auf der Bedienoberfläche (3) angeordnet ist, für die weitere Bedienhandlung ist das Bedienelement (1) mit einem Betätigungsteil(5) versehen, welches zur haptischen Wahrnehmung eines Bedieners ausgestaltet ist, wobei das Betätigungsteil(5) weiterhin ausgestaltet ist die weitere Betätigung durch den Bediener in ein elektrisches Bedien-Signal (6) zu wandeln, dabei weist das Bedienelement (1) eine Kontrolleinheit (7) auf, welche ausgestaltet ist das Bedien-Signal (6) als einen Bedienbefehl (60) für einen Datentransfer aufzubereiten, weiterhin aufweisend eine Übertragungseinheit (8), welche ausgestaltet ist den Bedienbefehl (60) von der Kontrolleinheit (7) entgegenzunehmen, wobei die Übertragungseinheit (8) derart in der Fußfläche (2) angeordnet ist, dass der Bedienbefehl (60) drahtlos durch die Bedienoberfläche (3) übertragbar ist, wobei das berührungsempfindliche Display (4) ein Empfangsmittel (41,42) zur Entgegennahme des Bedienbefehls (60) aufweist.

9. Bedien- und Beobachtungssystem (40) nach Anspruch 8, wobei die Übertragungseinheit (8) ein erstes Kopplungsmittel (8a), welches nach dem Prinzip der kapazitiven Kopplung arbeitet und/oder ein zweites Kopplungsmittel (8b), welches nach dem Prinzip der optischen Kopplung arbeitet, aufweist, wobei entsprechend das Empfangsmittel (41,42) ein erste Empfangsmittel (41) für die kapazitive Kopplung und ein zweites Empfangsmittel (42) für die optische Kopplung aufweist.

10. Bedien- und Beobachtungssystem (40), wobei das berührungsempfindliche Display (4), das Display (4a) und einen projiziert-kapazitiven Berührsensor (4b) aufweist, wobei zumindest Teilbereiche des Berührsensors (4b) für die kapazitive Kopplung genutzt werden, weiterhin ist das Display (4a) mit neben einer Matrix an Segmenten zur Informationsdarstellung mit einer Matrix von Fotosensoren ausgestattet.

11. Bedien- und Beobachtungssystem (40) nach einem der Ansprüche 8 bis 10, wobei in dem Bedienelement (1) ein Sicherungsmittel (9) angeordnet ist, welches ausgestaltet ist, den Bedienbefehl (60) mittels Sicherungsmechanismen in ein Sicherheitstelegramm (61,62) einzubetten und zur sicheren Übertragung an die an sich unsichere Übertragungseinheit (8) weiter zu geben.

12. Bedien- und Beobachtungssystem (40) nach Anspruch 11, wobei das Bedienelement (1) ein erstes Sicherungsmittel (9) aufweist, welches ausgestaltet ist, den Bedienbefehl (60) mittels Sicherungsmechanismen in ein erstes Sicherheitstelegramm (61) einzubetten und zur sicheren Übertragung an das an sich unsichere erste Kopplungsmittel (8a) weiter zu geben und weiterhin ein zweites Sicherungsmittel (9b) aufweist, welches ausgestaltet ist den Bedienbefehl (60) mittels Sicherungsmechanismen in ein zweites Sicherheitstelegramm (62) einzubetten und zur sicheren Übertragung an das an sich unsichere zweite Kopplungsmittel (9b) weiter zu geben, wobei das erste Empfangsmittel (41) und das zweite Empfangsmittel (42) entsprechende Auswertemittel (43,44) zur Prüfung einer fehlerfreien Datenübertragung des Bedienbefehls (60) aufweisen.

13. Bedien- und Beobachtungssystem (40) nach Anspruch 12, wobei weiterhin das zweite Kopplungsmittel (8b) ausgestaltet ist das zweite Sicherheitstelegramm (62) vom Bedienelement (1) zum berührungsempfindlichen Display (4) zu übertragen und ein drittes Sicherheitstelegramm (63) vom berührungsempfindlichen Display (4) zum Bedienelement (1) zu übertragen, wobei das Sicherungsmittel (9) ein Überwachungsmittel (20) aufweist, welches ausgestaltet ist eine fehlerfreie Funktionalität des Bedienelementes (1) zu überwachen und im Fehlerfall auf eine mittels des dritten Sicherheitstelegrammes (63) gesendete Funktionsanfrage eine Fehlerrückmeldung erzeugt.

14. Bedien- und Beobachtungssystem (40) nach einem der Ansprüche 8 bis 13, wobei zusätzlich in der Fußfläche (2) ein Energiegewinnungsmittel (10) angeordnet ist, welches ausgestaltet ist nach dem Photoeffekt einen elektrischen Strom zu erzeugen und eine Versorgungsspannung für das Bedienelement (1) bereitzustellen.

15. Bedien- und Beobachtungssystem (40) nach einem der Ansprüche 8 bis 14, wobei in der Fußfläche (2) eine Erkennungsmarke (30) angeordnet ist und ein Markenerkennungsmittel (35) dazu ausgestaltet ist zu erkennen, welche Art von Bedienelement (1) auf der Bedienoberfläche (3) angebracht ist und weiterhin ausgestaltet ist einer Visualisierungssoftware (36) eine Information über die Eigenschaften des jeweils angebrachten Bedienelementes (1) zu übermitteln.
